# EUROPEAN PATENT APPLICATION

(11) **EP 4 541 612 A1**
(43) Date of publication of application: **23.04.2025**
(21) Application number: 23204405.7
(22) Date of filing: 18.10.2023
(51) Int. Cl.: B60H 1/00, B60H 1/22, B60N 3/00

(54) **CABIN FOR A VEHICLE, VEHICLE, AND METHOD FOR USING THE CABIN**

(71) Applicant: Volvo Truck Corporation, 405 08 Göteborg (SE)
(72) Inventor: Quibriac, Yann, 69007 LYON (FR); Bonefons, Adrien, 69003 LYON (FR)
(74) Representative: Lavoix

(57) **Abstract**

A cabin for a heavy-duty vehicle, the cabin comprising a windshield, a bed (30), located inside the cabin, configured for a user to sleep on the bed (30), a heater (40), wherein the heater (40) is a radiant heater, wherein the bed (30) is positioned between a floor of the cabin and the heater (40), and the heater (40) is movable relative to the bed (30) between a first position, wherein the heater (40) is configured to emit infrared heating radiation (41) towards the bed (30), and a second position, wherein the heater (40) is configured to emit infrared heating radiation (41) towards the windshield.

## Description

### TECHNICAL FIELD

The disclosure relates generally to heating in vehicles. In particular aspects, the disclosure relates to a cabin for a vehicle, a vehicle and methods associated. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In heavy-duty vehicles such as trucks, a driver of the vehicle spends a considerable amount of time inside a cabin of the vehicle. In particular, the driver drives the vehicle inside the cabin, and may also eat, sleep and spend leisure time inside the cabin. It is therefore necessary to keep the driver at a comfortable temperature, as well as allow proper driving conditions, in particular prevent frost or fog from forming on a windshield of the cabin. However, traditional heating systems, for example where air is warmed and blown inside the cabin, are energy-intensive, loud and take time to be effective. The aim of the invention is to solve these disadvantages and disclose a more efficient heating system.

### SUMMARY

According to a first aspect of the disclosure, the invention relates to a cabin, for a heavy-duty vehicle, the cabin comprising :
- a windshield;
- a bed, located inside the cabin, configured for a user to sleep on the bed;
- a heater, wherein the heater is a radiant heater, wherein the bed is positioned between a floor of the cabin and the heater, and the heater is movable relative to the bed between:
   ∘ a first position, wherein the heater is configured to emit infrared heating radiation towards the bed; and
   ∘ a second position, wherein the heater is configured to emit infrared heating radiation towards the windshield.

The first aspect of the disclosure may seek to provide a cabin for a heavy-duty vehicle, the cabin being equipped with an efficient and versatile heating system. A technical benefit may include providing a heater that heats quickly the bed, or objects or people on the bed, and the windshield to be heated. Indeed, to heat the bed or the windshield, it is only necessary to emit infrared heating radiation towards the object, without obstruction, since the heater is a radiant heater, only. It is not necessary to heat an entire interior of the cabin to heat the objects to be heated. This makes the heater energy efficient, as only the object to be heated is heated, without wasting energy on heating the interior of the cabin. In addition to this, the heater is quiet, improving a comfort of the users of the heater, especially if they are sleeping with the heater emitting radiation. Finally, the heater is versatile, in that it can be moved in two positions, to heat different objects, and is therefore usable in different settings, where the bed, or people on the bed need to be heated, and where the windshield needs to be heated.

Optionally in some examples, including in at least one preferred example, the cabin comprises a rear wall to which the heater and the bed are attached, the heater and the bed being positioned between the rear wall and the windshield. A technical benefit may include that the heater is positioned at an optimal location for heating the bed and the windshield. The heater does not get in the way of the user when driving and also leaves space for the user when resting on the bed.

Optionally in some examples, including in at least one preferred example, the heater is movable in rotation between the first position, wherein the heater is oriented parallel to the bed, and the second position, wherein the heater is oriented perpendicular to the bed. A technical benefit may include optimizing the position of the heater when it is in the first position, and minimizing a space it occupies when the heater is in the second position.

Optionally in some examples, including in at least one preferred example, the heater comprises an array of infrared-emitting devices for emitting the infrared heating radiation. A technical benefit may include a better repartition of the emitted infrared heating radiation.

Optionally in some examples, including in at least one preferred example, the infrared-emitting devices are infrared laser diodes and/or infrared lamps. A technical benefit may include using directional and energy efficient infrared-emitting devices.

Optionally in some examples, including in at least one preferred example, the array of infrared-emitting devices comprises a plurality of sections, each section comprising at least one infrared-emitting device, each section being configured to be controlled independently from each other section to emit the infrared heating radiation. A technical benefit may include adapting the section emitting the infrared heating radiation to a specific need. For example, one section may be switched off while another section is switched on, so that the infrared heating radiation only radiates towards a specific part of a targeted object in the cabin, such as, only a part of the windshield or only a part of the bed, or only on a specific object, such as a cup holder of the cabin.

Optionally in some examples, including in at least one preferred example, the cabin further comprises processing circuitry, configured to switch the heater to a user-heating mode when the heater is in the first position, for heating a user on the bed and to a clearing mode, for clearing the windshield, when the heater is in the second position. A technical benefit may include tailoring a use of the heater to specific needs, here heating the user and clearing the windshield.

Optionally in some examples, including in at least one preferred example, each section emits the infrared heating radiation at a first intensity and in the clearing mode, each section emits the infrared heating radiation at a second intensity, different from the first intensity range. A technical benefit may include optimizing heating of the user and of the windshield.

Optionally in some examples, including in at least one preferred example, the cabin further comprises an infrared temperature sensor, located on the heater and connected to the processing circuitry, the infrared temperature sensor being configured to measure a temperature of objects. A technical benefit may include measuring the temperature of objects to better adapt infrared radiation emission based on the temperature measured.

Optionally in some examples, including in at least one preferred example, the processing circuitry is configured to:
- detect the user while the user is on the bed, by means of the infrared temperature sensor; and
- if the user is detected, in addition to if the heater is in the first position, switch the heater to the user-heating mode.

A technical benefit may include saving energy by switching the heater to the user-heating mode only when necessary, which is if the user is present.

Optionally in some examples, including in at least one preferred example, the processing circuitry is further configured to,
- compare a temperature of the windshield, measured by the infrared temperature sensor to a first temperature threshold; and
- if the temperature of the windshield, measured by the infrared temperature sensor, is below the first temperature threshold, in addition to if the heater is in the second position, switch the heater to the clearing mode.

A technical benefit may include saving energy by switching the heater to clearing mode only when necessary.

Optionally in some examples, including in at least one preferred example, the cabin further comprises a holder, located inside the cabin, and movable between a standby position and a deployed position, wherein the holder is configured to hold a piece of fabric for drying the piece of fabric when the holder is in the deployed position, and wherein the heater is configured to emit infrared heating radiation towards the piece of fabric held by the holder when the holder is in the deployed position. The piece of fabric is for example clothes and/or a towel belonging to the user. A technical benefit may include that the same heater that is used for clearing the windshield and heating the bed has a supplemental function of improving the drying of the piece of fabric.

Optionally in some examples, including in at least one preferred example, the holder is secured to the heater, wherein the holder is parallel to the heater when in the standby position, and wherein the holder extends away from the heater when in the deployed position. A technical benefit may include optimizing the location of the holder so the piece of fabric can be dried by the heater as quickly and efficiently as possible.

Optionally in some examples, including in at least one preferred example, the processing circuitry is further configured to determine if the holder is in the standby or the deployed position. A technical benefit may include automated determination of the position of the holder, to automatically adapt the infrared heating radiation to the position of the holder.

Optionally in some examples, including in at least one preferred example, the processing circuitry is configured to switch the heater to a drying mode to dry the piece of fabric if the heater is in the second position and the holder is in the deployed position. A technical benefit may include switching to the drying mode only when the holder is used, therefore preventing accidental switching to the drying mode and therefore saving energy.

Optionally in some examples, including in at least one preferred example, the processing circuitry is configured to control the sections so that, when the heater is in the drying mode, only the sections irradiating the piece of fabric emit the infrared heating radiation. A technical benefit may include making the heater more energy efficient by turning on only the sections that are useful to dry the piece of fabric and may include avoiding to heat the windshield when the user wishes to only dry the piece of fabric.

According to a second aspect of the disclosure, the invention further relates to a heavy-duty vehicle comprising the cabin as described above. The second aspect of the disclosure may seek to provide a heavy-duty vehicle with a cabin equipped with an efficient and versatile heating system. A technical benefit may include having a heavy-duty vehicle with a heater that heats quickly the objects inside the cabin to be heated, that is versatile as it can be used to heat objects for different purposes, that is energy efficient and quiet.

Optionally in some examples, including in at least one preferred example, the cabin is as described above and the vehicle further comprises a motor, and the processing circuitry is configured to switch the heater to the drying mode if the motor is turned on, in addition to if the holder is in the deployed position and the heater is in the second position. A technical benefit may include increasing energy efficiency, to prevent emptying of a battery of the vehicle. The motor is for example an electrical motor or a thermal motor and is used to power the vehicle when traveling on a road. If the motor is an electrical motor, the battery supplies both the motor and the heater with electricity and if the motor is a thermal motor, the battery that supplies the heater is charged by the thermal motor.

According to a third aspect of the disclosure, the invention further relates to a method for using a cabin, the cabin being as described above, the method comprising:
- moving the heater to the first position and emitting the infrared heating radiation towards the bed by means of the heater; and
- moving the heater to the second position and emitting the infrared heating radiation towards the windshield by means of the heater.

The third aspect of the disclosure may seek to provide a method for operating the heater of the cabin described above.

A technical benefit may include using in a safe and efficient manner a heater that heats quickly the objects inside the cabin to be heated, that is versatile as it can be used to heat objects for different purposes, that is energy efficient and quiet.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary heavy-duty vehicle according to an example.
**FIG. 2** is an exemplary cabin according to an example.
**FIG. 3** is a schematic of the heater of FIG. 3 in the user-heating mode.
**FIG. 4** is a schematic of a heater according to an example in the clearing mode.
**FIG. 5** is a schematic of a heater of FIG. 3 in the drying mode.
**FIG. 6** is an exemplary system diagram of a computer system according to an example.

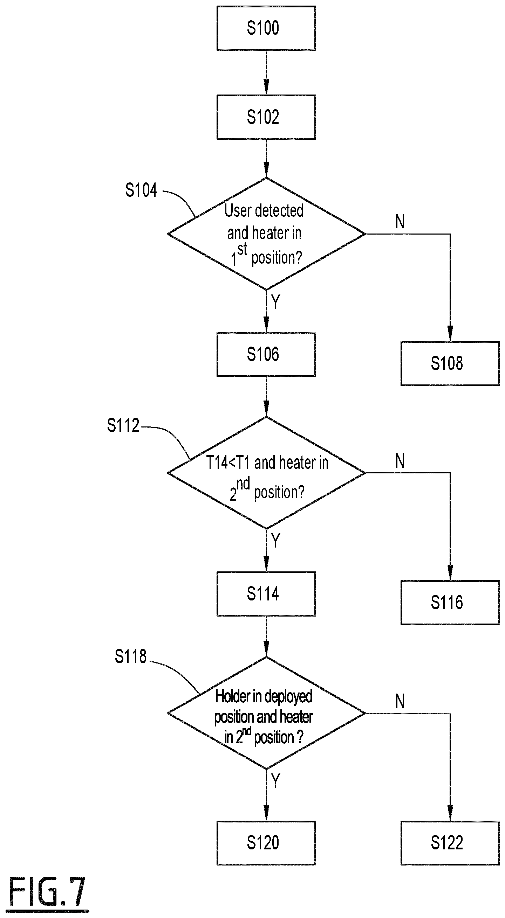

**FIG. 7** is a flow chart of an exemplary method to use a heater of a cabin according to an example.

### DETAILED DESCRIPTION

The detailed description set forth below provides information and examples of the disclosed technology with sufficient detail to enable those skilled in the art to practice the disclosure.

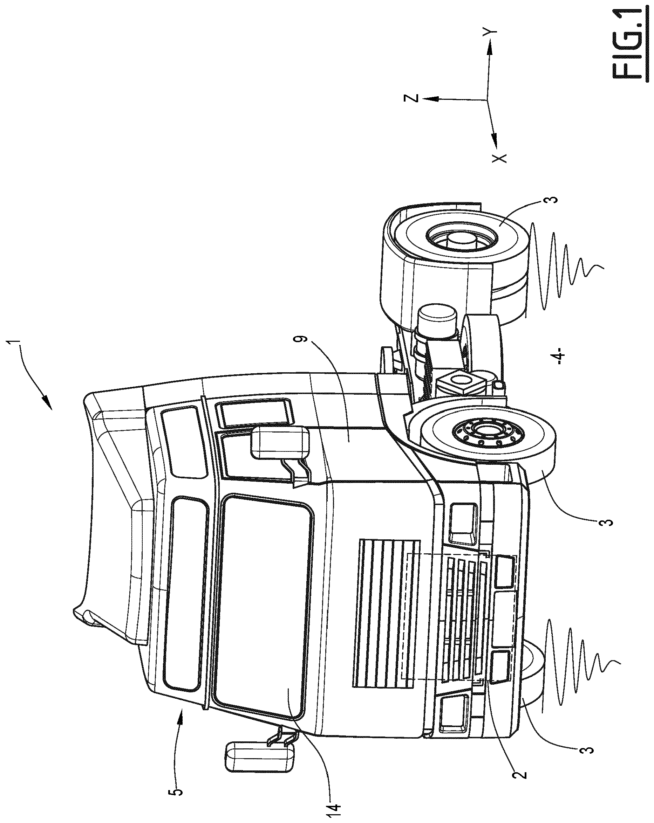

Figure 1 is an exemplary heavy-duty vehicle 1 according to an example. The heavy-duty vehicle 1 is a truck in the example of Figure 1, and will be referred to as truck 1 in the description. The truck 1 comprises a motor 2 and wheels 3. The wheels 3 are in contact with a ground 4, on which the truck 1 is configured to travel. The motor 2 is an electrical motor, configured to power the truck 1 when the truck 1 traveling on the ground 4. The motor 2 is supplied with electricity by a battery, or multiple batteries, not represented.

In variant the motor 2 is a heat engine, and charges the battery.

The truck 1 further comprises a cabin 5. A user of the truck 1, who is generally a driver of the truck 1, drives the truck 1 and may also eat, sleep and spend leisure time inside the cabin 5. The cabin 5 comprises a door 9, which may be opened and closed so the driver can access the cabin 5 from outside the cabin 5.

The cabin 5 comprises a windshield 14, a rear wall 16, and a floor 15, parallel to the ground 4. The windshield 14 is transparent for the driver to see surroundings of the truck 1 when the user is inside the cabin 5, for example when the user driving the truck 1. The windshield 14 and the rear wall 16 are aligned along a longitudinal axis X and extend transversally to the longitudinal axis X. A transversal axis Y and a height axis Z perpendicular to each other and the longitudinal axis X are also defined.

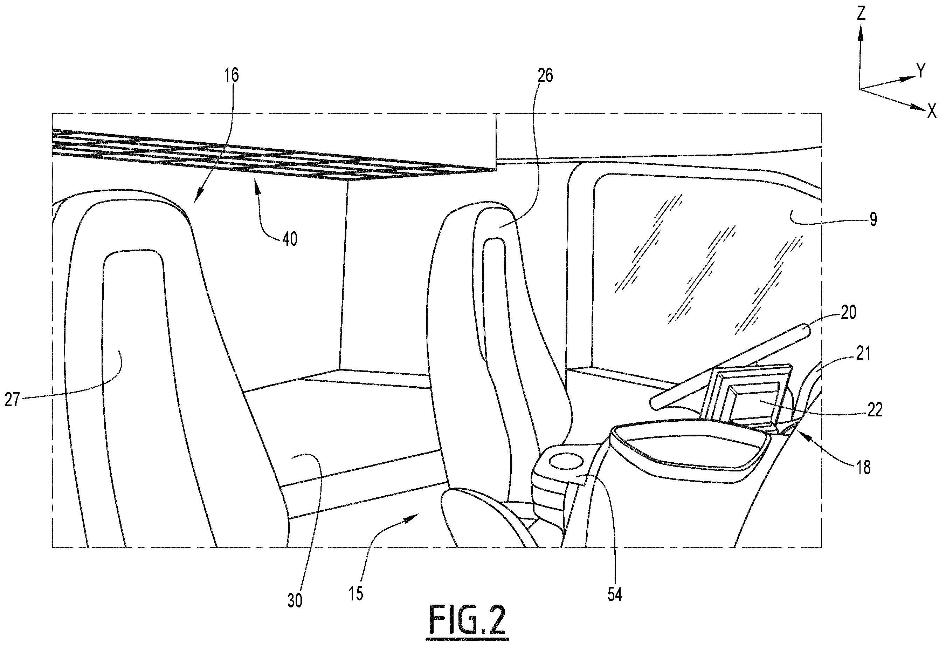

The cabin 5 comprises a dashboard 18, visible on figure 2, which comprises a steering wheel 20, for driving the truck 1, a primary display screen 21 and a secondary display screen 22. The cabin 5 also comprises a first seat 26, on which the user seats while driving the truck 1. In the example represented on the figures, the cabin 5 comprises a second seat 27, which is a passenger seat. The dashboard 18 is located between the seats 26, 27 and the windshield 14 along the longitudinal axis X.

The cabin 5 further comprises a bed 30, located inside the cabin 5. The bed 30 is configured for the user to sleep on it. In some examples, and as visible in figure 2, the bed 30 is located between the rear wall 16 and the windshield 14, more precisely between the rear wall 16 and the seats 26, 27 along the longitudinal axis X. In some examples, the bed 30 is attached to the rear wall 16 and extends along the transversal direction Y. In some examples, the bed 30 is pivotable between a low position, wherein the bed 30 is parallel to the floor 15, and a high position, wherein the bed 30 is pivoted and faces the rear wall 16 along the longitudinal axis X. Advantageously, in the high position, storage space, not represented, covered by the bed 30 when the bed 30 is in the low position, may be accessible to the user.

The cabin 5 further comprises a heater 40. The heater 40 is essentially flat, and located above the bed 30, in other words, the bed 30 is positionned between the floor 15 and the heater 40 along the height axis Z.

The heater 40 advantageously has a length 140 between 50 cm and 2 m and a width w40 between 20 cm and 1,50 m.

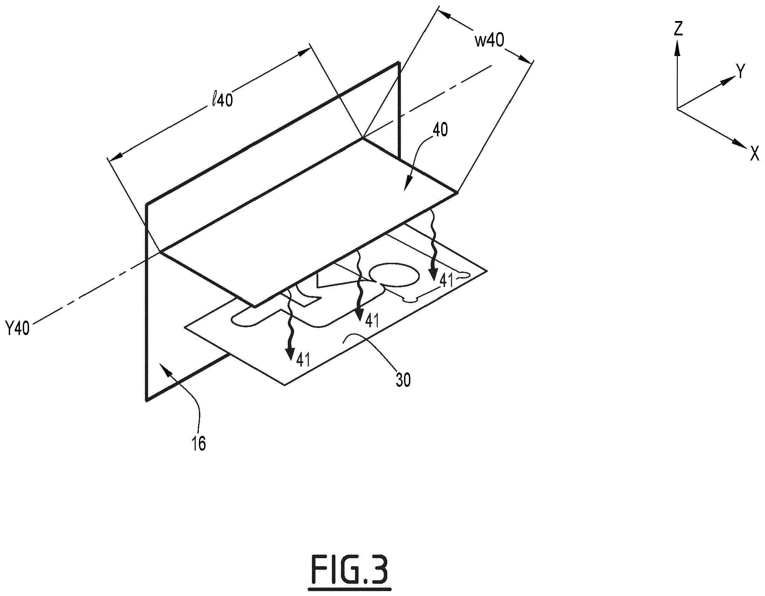

The heater 40 is a radiant heater, in that the heater 40 is configured to emit infrared heating radiation 41, represented by arrows in figures 3 to 5, in opposition with heaters configured to blow air. The heater 40 is electrically powered, by the battery or batteries of the truck 1. The heater 40 is movable relative to the bed 30 between a first position and a second position. In the first position, the heater 40 is configured to emit infrared (IR) heating radiation 41 towards the bed 30 to heat the bed 30, and in the second position, the heater 40 is configured to emit IR heating radiation 41 towards the windshield 14, to heat the windshield 14.

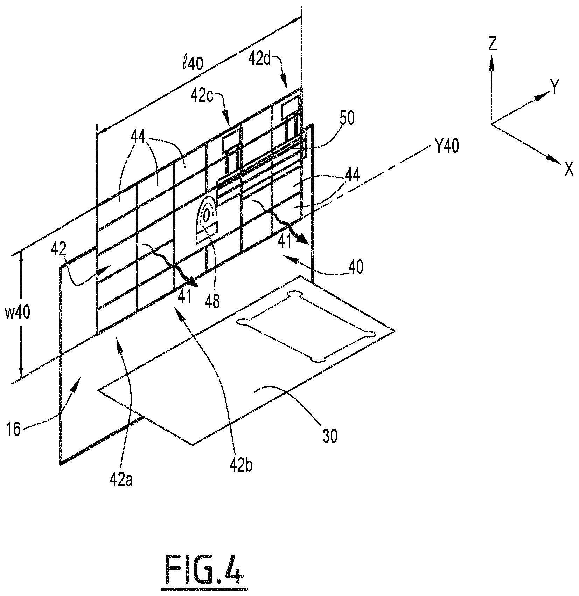

In the example represented in the figures, the heater 40 is attached to the rear wall 16 and is movable in rotation around a rotation axis Y40 between the first and the second position. As visible in figure 3, in the first position, the heater 40 and the bed 30 are parallel to each other, and are aligned with each other along the height axis Z. In the second position, the heater 40 is configured to emit infrared heating radiation 41 towards the windshield 14. In some examples, and as visible on figure 4, in the second position, the heater 40 is perpendicular to the bed 30. In variant, the heater 40 is inclined relative to the bed 30 at an angle that is lower than 90°.

Advantageously, the heater 40 comprises an array 42 of infrared-emitting devices 44. The infrared-emitting devices 44 are for example infrared lamps, or infrared laser diodes. When the infrared-emitting devices 44 are turned on, they emit IR heating radiation 41 in order to heat objects irradiated by the IR heating radiation 41. A diffusion angle of the infrared-emitting devices 44 is advantageously equal to, or less than 90°. An intensity of the IR heating radiation 41 is advantageously configured to be adjusted.

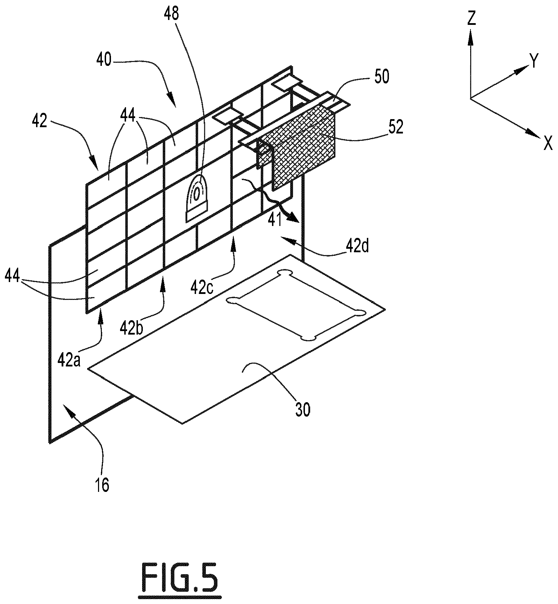

Advantageously, the array 42 is divided into a plurality of sections, for example four sections 42a, 42b, 42c and 42d, visible in figures 4 and 5. Each section 42a to 42d comprises at least one infrared-emitting device 44, and in the example of the figures, each section 42a to 42d comprises multiple infrared-emitting devices 44. In variant, the array 42 is divided into more or less sections than the four sections 42a to 42d. The sections 42a to 42d are advantageously arranged along the transversal axis Y. Advantageously, each section 42a to 42d is configured to be turned on and off individually from the other sections 42a to 42d. In particular, the intensity of the IR heating radiation 41 emitted by the infrared-emitting devices 44 in one section 42a to 42d is configured to be controlled independently from the intensity of the IR heating radiation 41 emitted by the infrared-emitting devices 44 in the other sections 42a to 42d. Therefore, one section 42a to 42d may be switched off while another section 42a to 42d is switched on, so that the IR heating radiation 41 only radiates towards a specific part of a targeted object in the cabin, such as, only a part of the windshield 14 or only a part of the bed 30.

Advantageously, the cabin 5 further comprises an infrared temperature sensor 48, also called sensor, located on the heater 40 and visible on figures 4 and 5. In some examples, the infrared temperature sensor 48 is an infrared camera. In the example of the figures, the sensor 48 is located in a center of the heater 40, but in variant, the sensor 48 is located on an edge of the heater 40. Advantageously, the sensor 48 is located away from the infrared-emitting devices 44, so that it is minimally irradiated by the IR heating radiation 41 from the infrared-emitting devices 44. For example, the sensor 48 is located in a portion of the heater 40 where there are no infrared-emitting devices 44. The sensor 48 has a field of view and is configured to acquire a temperature of objects within the field of view of the sensor 48.

Advantageously, the cabin 5 further comprises a holder 50. In the example of the figures, the holder 50 is secured to the heater 40 and is a towel holder. The holder 50 is pivotable between a standby position and a deployed position. In the standby position, the holder 50 is parallel to the heater 40. In the deployed position, the holder 50 extends away from the heater 40, for example is perpendicular to the heater 40, and is configured to hold a piece of fabric, here a towel 52, for drying the piece of fabric.

In some examples, the cabin 5 further comprises an electrical switch, not represented, that is activated by the holder 50 when it is pivoted in the deployed position.

In some examples, not represented, the holder is simply located inside the cabin, for example attached to the rear wall, and is movable, for example by sliding, between the extended and the stand-by positions.

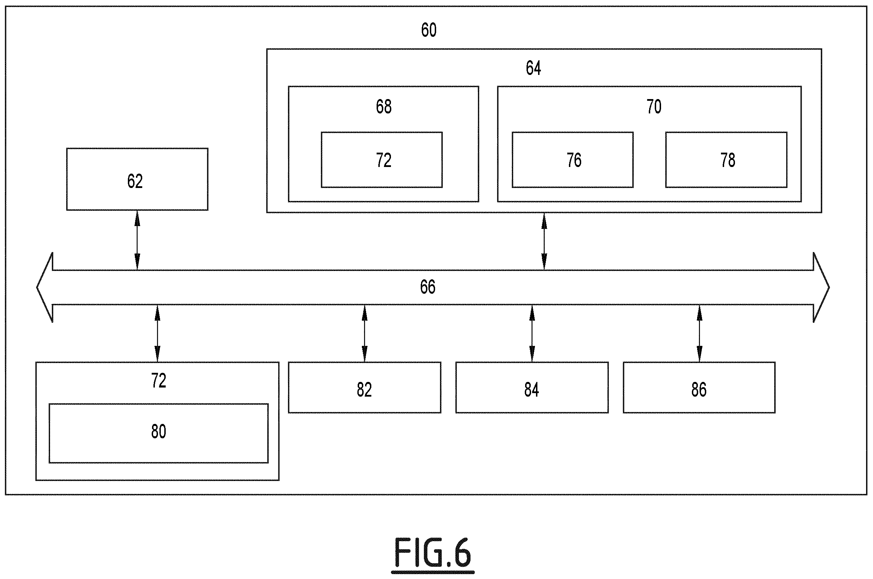

The truck 1 further comprises a computer system 60. FIG. 6 is a schematic diagram of the computer system 60 for implementing examples disclosed herein. The computer system 60 is adapted to execute instructions from a computer-readable medium to perform these and/or any of the functions or processing described herein. The computer system 60 may be connected and/or networked to other machines in a LAN (Local Area Network), LIN (Local Interconnect Network), automotive network communication protocol, for example, FlexRay, an intranet, an extranet, or the Internet. While only a single device is illustrated, the computer system 60 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set, or multiple sets, of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 60 may comprise at least one computing device or electronic device capable of including firmware, hardware, and/or executing software instructions to implement the functionality described herein. The computer system 60 may include processing circuitry 62 such as processing circuitry including one or more processor devices or control units, a memory 64, and a system bus 66. The computer system 60 may include at least one computing device having the processing circuitry 62. The system bus 66 provides an interface for system components including, but not limited to, the memory 64 and the processing circuitry 62. The processing circuitry 62 may include any number of hardware components for conducting data or signal processing or for executing computer code stored in memory 64. The processing circuitry 62 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 62 may further include computer executable code that controls operation of the programmable device.

The system bus 66 may be any of several types of bus structures that may further interconnect to a memory bus (with or without a memory controller), a peripheral bus, and/or a local bus using any of a variety of bus architectures. The memory 64 may be one or more devices for storing data and/or computer code for completing or facilitating methods described herein. The memory 64 may include database components, object code components, script components, or other types of information structure for supporting the various activities herein. Any distributed or local memory device may be utilized with the systems and methods of this description. The memory 64 may be communicably connected to the processing circuitry 62 for example via a circuit or any other wired, wireless, or network connection and may include computer code for executing one or more processes described herein. The memory 64 may include non-volatile memory 68 (e.g., read-only memory (ROM), erasable programmable read-only memory (EPROM), electrically erasable programmable read-only memory (EEPROM), etc.), and volatile memory 70 for example random-access memory (RAM), or any other medium which can be used to carry or store desired program code in the form of machine-executable instructions or data structures and which can be accessed by a computer or other machine with processing circuitry 62. A basic input/output system (BIOS) 72 may be stored in the non-volatile memory 68 and can include the basic routines that help to transfer information between elements within the computer system 60.

The computer system 60 may further include or be coupled to a non-transitory computer-readable storage medium such as the storage device 74, which may comprise, for example, an internal or external hard disk drive (HDD) such as enhanced integrated drive electronics (EIDE) or serial advanced technology attachment (SATA), flash memory, or the like. The storage device 74 and other drives associated with computer-readable media and computer-usable media may provide non-volatile storage of data, data structures, computerexecutable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 74 and/or in the volatile memory 70, which may include an operating system 76 and/or one or more program modules 78. All or a portion of the examples disclosed herein may be implemented as a computer program 80 stored on a transitory or non-transitory computer-usable or computer-readable storage medium, such as single medium or multiple media, such as the storage device 74, which includes complex programming instructions for example complex computer-readable program code to cause the processing circuitry 62 to carry out actions described herein. Thus, the computer-readable program code of the computer program 80 can comprise software instructions for implementing the functionality of the examples described herein when executed by the processing circuitry 62. In some examples, the storage device 74 may be a computer program product, for example a readable storage medium storing the computer program 80 thereon, where at least a portion of a computer program 80 may be loadable, for example into a processor for implementing the functionality of the examples described herein when executed by the processing circuitry 62. The processing circuitry 62 may serve as a controller or control system for the computer system 60 that is to implement the functionality described herein.

The computer system 60 may include an input device interface 82 configured to receive input and selections to be communicated to the computer system 60 when executing instructions, such as from a keyboard, mouse, touch-sensitive surface, etc. Such input devices may be connected to the processing circuitry 62 through the input device interface 82 coupled to the system bus 66 but can be connected through other interfaces, such as a parallel port, an Institute of Electrical and Electronic Engineers (IEEE) 1394 serial port, a Universal Serial Bus (USB) port, an IR interface, and the like. The computer system 60 may include an output device interface 84 configured to forward output, such as to a display, a video display unit, for example a liquid crystal display (LCD) or a cathode ray tube (CRT). The computer system 60 may include a communications interface 86 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Advantageously, the computer system 60, more specifically the processing circuitry 62 is connected to the heater 40, and in some examples to the camera 48 and to the switch. Being connected to the switch means that the processing circuitry 62 is configured to determine if the holder 50 is in the stand-by position or in the deployed position. The processing circuitry 62 is configured to switch the heater 40 to a user-heating mode, to a clearing mode and to a drying mode.

When the heater 40 is in the first position, the heater 40 is configured to switch to the user-heating mode, in which at least one of the sections 42a to 42d, advantageously each section 42a to 42d, emits IR heating radiation 41 towards the bed 30 for heating a user on the bed 30. The user-heating mode is visible on figure 3. The user-heating mode is particularly advantageous to keep the user warm while he or she is sleeping or lying on the bed 30.

In some examples, the processing circuitry 62 is further configured to detect the user while the user is on the bed 30, for example is lying on the bed 30. This is done for example by the sensor 48, or in variant, by a weight sensor. In this case, the processing circuitry 62 is configured to switch the heater 40 to the user-heating mode if the user is detected on the bed 30 in addition to the heater 40 being in the first position.

In some examples, in the user-heating mode, each section 42a to 42d emits IR heating radiation 41 towards the bed 30 in a first intensity range. The first intensity range is configured so that the user, when on the bed 30, is heated at a temperature that is higher than a temperature of the user, or of objects on the bed 30, such as bedding or blankets, to heat them. For example, the first intensity range is comprised so that the user, or the objects on the bed, when exposed to the IR heating radiation 41, are heated at temperatures between 15 and 45 °C.

In some examples, in the user-heating mode, each section 42a to 42d emits IR heating radiation 41 towards the bed 30 with varying intensity, so that a temperature gradient is formed along the transversal axis Y. In some examples, the processing circuitry 62 and/or the sensor 48 is configured to detect specifically a head of the user and orient the temperature gradient so that a minimal IR heating radiation intensity, in other words, a lowest temperature, is emitted by the section 42a to 42d closest to the head of the user, for example the section 42a to 42d directly above the head of the user along the height axis Z. The IR heating radiation intensity then increases for the sections 42a to 42d facing a body of the user and are maximal for the section furthest from the head of the user, for example the section facing feet of the user along the height axis Z. Advantageously, the IR heating radiation intensity when forming the temperature gradient remains in the first intensity range.

As the user-heating mode is for warming the user while he or she is sleeping, the user-heating mode may be operated for intervals of time of several hours. In some examples, when the heater 40 is in the second mode, the processing circuitry 62 commands the heater to perform a sleep cycle, which may consist in adjusting the IR heating radiation intensity of the heater 40 over time. For example, the processing circuitry 62 controls a decrease of the IR heating radiation intensity emitted over time, which allows to save electricity. As a variant, or in addition to decreasing of the IR heating radiation intensity emitted over time, the processing circuitry 62 may be further configured to increase the IR heating radiation intensity close to a time when the user wakes up. In the latter case, the processing circuitry 62 is advantageously synchronized with an alarm clock comprised in the cabin 5, and controls the increase in the IR heating radiation intensity, for example half an hour before the alarm clock is configured to set off.

In some examples, the processing circuitry 62 commands the heater 40 to decrease the IR heating radiation intensity emitted by the array 42 if the temperature of the user is equal to or above a user temperature threshold. In variant, if the temperature of the user is equal to or above the user temperature threshold, the processing circuitry 62 commands the heater 40 to stop emitting IR heating radiation 41.

When the heater 40 is in the second position, the processing circuitry 62 is configured to switch the heater 40 to the clearing mode. The clearing mode is visible on figure 4. In some examples, in the clearing mode, the infrared-emitting devices 44 of at least one section 42a to 42d, preferably of all the sections 42a to 42d, emit IR heating radiation 41, to heat the windshield 14. This prevents formation of fog and/or frost on the windshield 14 or to clear the windshield from fog and/or frost formed on it. In some examples, in the clearing mode, each section 42a to 42d emits IR heating radiation 41 towards the windshield 40 in a second intensity range, which is different from the first intensity range. The second intensity range is configured so that the windshield 14, when exposed to the IR heating radiation 41, is heated at temperatures between 0 and 5 °C.

In some examples, the sensor 48 is configured to measure a temperature T14 of the windshield 14, and the processing circuitry 62 is configured to compare it to a windshield temperature threshold T1 and to switch the heater 40 to the clearing mode if the temperature T14 is below the windshield temperature threshold T1 and the heater 40 in the second position. The first temperature threshold T1 is for example 3°C.

In some examples, not represented, the temperature of the windshield is measured by a specific thermometer, which is located on the windshield for example.

In some examples, if the temperature T14 of the windshield 14 is equal or superior to the first temperature threshold T1, the processing circuitry 62 is configured to control the heater 40 to decrease the intensity of the IR heating radiation 41 emitted by the heater 40. For example, the processing circuitry 62 commands the heater 40 to stop heating, in other words, turns off the heater 40. In variant, the heater 40 is still in the clearing mode, but the IR heating radiation intensity is for example divided by two or more. This is done to limit electrical consumption by the heater 40 while making sure that the windshield stay clear.

In some examples, the processing circuitry 62 is further configured to control the heater 40 to switch to the clearing mode only when the truck 1 is parked, for example by monitoring if a park brake of the truck 1 is engaged or not, in addition to the heater 40 being in the second position and the temperature T1 being below the windshield temperature threshold T14.

The processing circuitry 62 is further configured to switch the heater 40 to a drying mode, when the heater 40 is in the second position, and the holder 50 is in the deployed position. The drying mode is designed to dry objects placed on the holder 50, such as the towel 52.

In some examples, the processing circuitry 62 is configured to switch the heater 40 in the drying mode if the sensor 48 detects that an object such as the towel 52, or more generally, a piece of fabric has been placed on the holder 50, in addition to the holder 50 being deployed and the heater 40 being in the second position.

In the drying mode, at least one of the sections 42a to 42d emits IR heating radiation 41. Advantageously, the sections 42a to 42d that emit IR heating radiation 41 are only the sections irradiating the towel 52 when the heater 40 is in the second position and the holder 50 is in the deployed position. In particular, the sensor 48, or in variant, an onboard sensor located in the cabin 5, determines a size of the towel 52, and in the drying mode, the processing circuitry adapts the sections 42a to 42d that emit IR heating radiation 41 to the size of the towel 52 to optimize the drying of the towel 52 while limiting electrical consumption.

In some examples, the processing circuitry 62 is further configured to switch the heater to the drying mode if the motor 2 is turned on, in addition to the holder 50 being in the deployed position and the heater 40 in the second position. This is particularly useful because it allows the clearing mode to have priority over the drying mode. Indeed, the clearing mode is advantageously used before the truck is being driven, and therefore, when the motor 2 is turned off. Therefore, having the processing circuitry 62 configured to switch the heater 40 to the drying mode if the motor 2 is turned on in addition to the previous conditions mean that the drying mode is not turned on when the user needs to use the heater 40 in the clearing mode, even if, by accident, the holder 50 is in the deployed position.

A method for using the heater 40 is now described below.

Moving the heater 40 to the first position is performed at step S 100, for example by the user.

The user positions himself or herself on the bed 30 at step S 102, for example lies down on the bed 30.

The sensor 48 detects the user on the bed 30 at step S104, for example by detecting that the temperature of the user is higher than a temperature of the bed 30.

If the user is detected and the heater 40 is in the first position, the processing circuitry 62 controls the heater 40 to switch to the user-heating mode and to emit the IR heating radiation 41 towards the bed 30 at step S106.

If the user is not detected or the heater 40 is not in the first position, then the processing circuitry 62 commands the heater 40 to stop emitting IR heating radiation 41 at step S108, or in variant, to stay turned off and to not emit IR heating radiation 41.

Moving the heater 40 to the second position is performed at step S110, for example, by the user.

The temperature T14 of the windshield 14 is measured by the sensor 48 at step S112.

If the temperature T14 is below the windshield temperature threshold T1, and the heater 40 is in the second position, the processing circuitry 62 controls the heater 40 to switch to the clearing mode, and to emit the IR heating radiation 41 towards the windshield 14 in step S114.

If the temperature T14 is equal to or above the windshield temperature threshold T1 or the heater 40 is not in the second position, the processing circuitry 62 controls the heater 40 to stop emitting IR heating radiation 41 at step S116, or in variant, to stay turned off and to not emit IR heating radiation 41.

In some examples, the method further comprises the following steps.

The processing circuit 62 determines whether the holder 50 is in the deployed position at step S118.

If the holder 50 is in the deployed position and the heater 40 is in the second position, the processing circuitry 62 switches the heater 40 in the drying mode at step S120.

If the holder 50 is in the standby position or the heater 40 is not in the second position, then the processing circuitry 62 commands the heater 40 to stop emitting radiations at step S122 or in variant, to stay turned off and to not emit IR heating radiation 41.

Steps S100 to S108 may be performed before or after steps S110 to S116 and steps S118 to S120

In some examples, the heater 40 is further configured to switch to an additional heating mode. The additional heating mode is for example a localized heating mode, which is designed to warm specific locations of the cabin 5 such as a cup holder 54. The additional heating mode is in this case advantageous to slow a cooling of beverages in a cup held by the cup holder 54.

In some examples, the user may manually start one of the heating, clearing and drying modes, or defines a custom heating mode.

In some examples, the user may manually change a radiation intensity emitted by the array 42, a shape and orientation of the gradient when the heater 40 is in the second mode. In some examples, the user may further program the heater 40 to switch to specific modes are predetermined times. For example, the user may program the heater 40 so that before a predetermined time, the windshield 14 is defogged and/or defrosted.

The manual operations described above may be performed from the secondary display screen 22.

In some examples, not represented, the heater may be further configured to emit ultraviolet (UV) radiation, in addition to IR heating radiation. For example, the infrared-emitting devices may be further configured to emit UV radiation, or the heater may comprise additional UV-emitting devices. In this case, when the heater is in the first position, it is further configured to switch to a sun-tanning mode, in which UV radiation is emitted towards the bed. When the user is on the bed and the heater is switched to the sun-tanning mode, the user is exposed to UV radiation so he or she may get a tan. The sun-tanning mode is preferably manually started by the user, to prevent involuntary exposition of the user to UV radiation.

As a variant that is not represented, the cabin comprises a second bed. The second bed is secured to the rear wall and located above the first bed, in other words, the first bed is located between the floor and the second bed along the height axis. The second bed is advantageously pivotable between the low position and the high position, similarly to the first bed. In the high position, the second bed may be parallel to the rear wall or may be inclined relative to the rear wall. The heater is advantageously secured to the second bed, and pivots with the second bed.

**Example 1:** A cabin 5, for a heavy-duty vehicle 1, the cabin 5 comprising :
- a windshield 14;
- a bed 30, located inside the cabin 5, configured for a user to sleep on the bed 30;
- a heater 40, wherein the heater 40 is a radiant heater, wherein the bed 30 is positioned between a floor 15 of the cabin 5 and the heater 40, and the heater 40 is movable relative to the bed 30 between:
   o a first position, wherein the heater 40 is configured to emit infrared heating radiation 41 towards the bed 30; and
   o a second position, wherein the heater 40 is configured to emit infrared heating radiation 41 towards the windshield 14.

**Example 2:** The cabin 5 of example 1, wherein the cabin 5 comprises a rear wall 16 to which the heater 40 and the bed 30 are attached, the heater 40 and the bed 30 being positioned between the rear wall 16 and the windshield 14.

**Example 3:** The cabin 5 of any of examples 1 or 2, wherein the heater 40 is movable in rotation between the first position, wherein the heater 40 is oriented parallel to the bed 30, and the second position, wherein the heater 40 is oriented perpendicular to the bed 30.

**Example 4:** The cabin 5 of any of examples 1 to 3, wherein the heater 40 comprises an array 42 of infrared-emitting devices 44 for emitting the infrared heating radiation 41.

**Example 5:** The cabin 5 of example 4, wherein the infrared-emitting devices 44 are infrared laser diodes and/or infrared lamps.

**Example 6:** The cabin 5 of any of examples 4 or 5, wherein the array 42 of infrared-emitting devices 44 comprises a plurality of sections 42a, 42b, 42c, 42d, each section 42a, 42b, 42c, 42d comprising at least one infrared-emitting device 44, each section 42a, 42b, 42c, 42d being configured to be controlled independently from each other section 42a, 42b, 42c, 42d to emit the infrared heating radiation 41.

**Example 7:** The cabin 5 of any of examples 4 to 6, further comprising processing circuitry 62, configured to switch the heater 40 to a user-heating mode when the heater 40 is in the first position, for heating a user on the bed 30 and to a clearing mode, for clearing the windshield 14, when the heater 40 is in the second position.

**Example 8:** The cabin 5 of example 7 cumulatively with example 6, wherein when the heater 40 is in the user-heating mode each section 42a, 42b, 42c, 42d emits the infrared heating radiation 41 at a first intensity and in the clearing mode, each section 42a, 42b, 42c, 42d emits the infrared heating radiation 41 at a second intensity, different from the first intensity range.

**Example 9:** The cabin 5 of any of examples 7 or 8, further comprising an infrared temperature sensor 48, located on the heater 40 and connected to the processing circuitry 62, the infrared temperature sensor 48 being configured to measure a temperature of objects.

**Example 10:** The cabin 5 of example 9, wherein the processing circuitry 62 is configured to:
- detect the user while the user is on the bed 30, by means of the infrared temperature sensor 48; and
- if the user is detected, in addition to if the heater 40 is in the first position, switch the heater 40 to the user-heating mode.

**Example 11:** The cabin 5 of any of examples 9 or 10, wherein the processing circuitry 62 is further configured to,
- compare a a temperature T14 of the windshield 14, measured by the infrared temperature sensor 48 to a first temperature threshold T1; and
- if the temperature T14 of the windshield 14, measured by the infrared temperature sensor 48, is below the first temperature threshold T1, in addition to if the heater 40 is in the second position, switch the heater 40 in the clearing mode.

**Example 12:** The cabin 5 of any of the preceding examples, further comprising a holder 50, located inside the cabin 5, and movable between a standby position and a deployed position, wherein the holder 50 is configured to hold a piece of fabric 52 for drying the piece of fabric 52 when the holder 50 is in the deployed position, and wherein the heater 40 is configured to emit infrared heating radiation 41 towards the piece of fabric 52 held by the holder 50 when the holder 50 is in the deployed position.

**Example 13:** The cabin 5 of example 12, wherein the holder 50 is secured to the heater 40, wherein the holder 50 is parallel to the heater 40 when in the standby position, and wherein the holder 50 extends away from the heater 40 when in the deployed position.

**Example 14:** The cabin 5, according to any one of examples 7 to 11 and cumulatively according to example 13, wherein the processing circuitry 62 is further configured to determine if the holder 50 is in the standby or the deployed position.

**Example 15:** The cabin 5 of example 14, wherein the processing circuitry 62 is configured to switch the heater 40 to a drying mode to dry the piece of fabric 52 if the heater 40 is in the second position and the holder 50 is in the deployed position.

**Example 16:** The cabin 5 according to example 15 and cumulatively to example 6, wherein the processing circuitry 62 is configured to control the sections so that, when the heater 40 is in the drying mode, only the sections 42a, 42b, 42c, 42d irradiating the piece of fabric 52 emit the infrared heating radiation 41.

**Example 17:** A heavy-duty vehicle 1 comprising the cabin 5 according to any of examples 1 to 16.

**Example 18:** The vehicle 1 of example 17, wherein the cabin 5 is according to any one of examples 15 or 16, wherein the vehicle 1 further comprises a motor 2, and wherein the processing circuitry 62 is configured to switch the heater 40 to the drying mode if the motor 2 is turned on, in addition to if the holder 50 is in the deployed position and the heater 40 is in the second position.

**Example 19:** Method for using a heater 40 of a cabin 5, the cabin 5 being according to example 1, the method comprising:
- moving S100 the heater 40 to the first position and emitting S106 the infrared heating radiation 41 towards the bed 30 by means of the heater 40; and
- moving S110 the heater 40 to the second position and emitting S114 the infrared heating radiation 41 towards the windshield 14 by means of the heater 40.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cabin (5), for a heavy-duty vehicle (1), the cabin (5) comprising :
- a windshield (14);
- a bed (30), located inside the cabin (5), configured for a user to sleep on the bed (30);
- a heater (40), wherein the heater (40) is a radiant heater, wherein the bed (30) is positioned between a floor (15) of the cabin (5) and the heater (40), and the heater (40) is movable relative to the bed (30) between:
∘ a first position, wherein the heater (40) is configured to emit infrared heating radiation (41) towards the bed (30); and
∘ a second position, wherein the heater (40) is configured to emit infrared heating radiation (41) towards the windshield (14).

2. The cabin (5) of claim 1, wherein the cabin (5) comprises a rear wall (16) to which the heater (40) and the bed (30) are attached, the heater (40) and the bed (30) being positioned between the rear wall (16) and the windshield (14).

3. The cabin (5) of any of claims 1 or 2, wherein the heater (40) is movable in rotation between the first position, wherein the heater (40) is oriented parallel to the bed (30), and the second position, wherein the heater (40) is oriented perpendicular to the bed (30).

4. The cabin (5) of any of claims 1 to 3, wherein the heater (40) comprises an array (42) of infrared-emitting devices (44) for emitting the infrared heating radiation (41).

5. The cabin (5) of claim 4, wherein the array (42) of infrared-emitting devices (44) comprises a plurality of sections (42a, 42b, 42c, 42d), each section (42a, 42b, 42c, 42d) comprising at least one infrared-emitting device (44), each section (42a, 42b, 42c, 42d) being configured to be controlled independently from each other section (42a, 42b, 42c, 42d) to emit the infrared heating radiation (41).

6. The cabin (5) of any of claims 4 to 5, further comprising processing circuitry (62), configured to switch the heater (40) to a user-heating mode when the heater (40) is in the first position, for heating a user on the bed (30) and to a clearing mode, when the heater (40) is in the second position, for clearing the windshield (14).

7. The cabin (5) of claim 6 cumulatively with claim 5, wherein when the heater (40) is in the user-heating mode, each section (42a, 42b, 42c, 42d) emits the infrared heating radiation 41 in a first intensity range and in the clearing mode, each section (42a, 42b, 42c, 42d) emits the infrared heating radiation (41) in a second intensity range, different from the first intensity range.

8. The cabin (5) of any of claims 6 or 7, further comprising an infrared temperature sensor (48), located on the heater (40) and connected to the processing circuitry (62), the infrared temperature sensor (48) being configured to measure a temperature of objects.

9. The cabin (5) of claim 8, wherein the processing circuitry (62) is configured to:
- detect the user while the user is on the bed (30), by means of the infrared temperature sensor (48); and
- if the user is detected, in addition to if the heater (40) is in the first position, switch the heater (40) to the user-heating mode.

10. The cabin (5) of any of claims 8 or 9, wherein the processing circuitry (62) is further configured to,
- compare a temperature (T14) of the windshield (14), measured by the infrared temperature sensor (48) to a first temperature threshold (T1); and
- if the temperature (T14) of the windshield (14), measured by the infrared temperature sensor (48), is below the first temperature threshold (T1), in addition to if the heater (40) is in the second position, switch the heater (40) to the clearing mode.

11. The cabin (5) of any of the preceding claims, further comprising a holder (50), located inside the cabin (5), and movable between a standby position and a deployed position, wherein the holder (50) is configured to hold a piece of fabric (52) for drying the piece of fabric (52) when the holder (50) is in the deployed position, and wherein the heater (40) is configured to emit infrared heating radiation (41) towards the piece of fabric (52) held by the holder (50) when the holder (50) is in the deployed position.

12. The cabin (5), according to any one of claims 6 to 10 and cumulatively according to claim 11, wherein the processing circuitry (62) is further configured to determine if the holder (50) is in the standby or the deployed position.

13. The cabin (5) of claim 12, wherein the processing circuitry (62) is configured to switch the heater (40) to a drying mode to dry the piece of fabric (52) if the heater (40) is in the second position and the holder (50) is in the deployed position.

14. A heavy-duty vehicle (1) comprising the cabin (5) according to any of claims 1 to 13.

15. Method for using the cabin (5) according to any one of claims 1 to 13, the method comprising:
- moving (S100) the heater (40) to the first position and emitting (S106) the infrared heating radiation (41) towards the bed (30) by means of the heater (40); and
- moving (S110) the heater (40) to the second position and emitting (S114) the infrared heating radiation (41) towards the windshield (14) by means of the heater (40).
